# EUROPÄISCHE PATENTSCHRIFT

(11) **EP 3 269 583 B1**
(45) Veröffentlichungstag und Bekanntmachung des Hinweises auf die Patenterteilung: **03.03.2021**
(21) Anmeldenummer: 17180747.2
(22) Anmeldetag: 11.07.2017
(51) Int. Cl.: B60L 5/39

(54) **SEITENSTROMABNEHMERVORRICHTUNG FÜR EIN SCHIENENFAHRZEUG**
SIDE CURRENT COLLECTOR FOR A RAIL VEHICLE
DISPOSITIF CONSOMMATEUR DE COURANT LATÉRAL POUR UN VÉHICULE SUR RAIL

(30) Priorität: 15.07.2016 DE 102016113083
(43) Veröffentlichungstag der Anmeldung: 17.01.2018
(73) Patentinhaber: Bombardier Transportation GmbH, 10785 Berlin (DE); Schunk Bahn- und Industrietechnik GmbH, 35435 Wettenberg (DE)
(72) Erfinder: Fleischhauer, Guntram, 35102 Lohra/Kirchvers (DE); Schneider, Peter, 35112 Fronhausen (DE); Heidrich, Peter, 67067 Ludwigshafen (DE); Künzel, Thomas, 16727 Velten (DE); Dr. August, Peter, 13127 Berlin (DE)
(74) Vertreter: Zimmermann & Partner Patentanwälte mbB

(56) Entgegenhaltungen:
- EP-A1- 0 489 614
- WO-A1-2015/110325
- CN-U- 205 130 955
- DE-A1- 1 513 621
- US-A- 5 669 472

## Beschreibung

### Technisches Gebiet

Die vorliegende Erfindung betrifft eine Seitenstromabnehmervorrichtung für ein Schienenfahrzeug, insbesondere für ein elektrisch angetriebenes Schienenfahrzeug wie einen Triebwagen eines Nahverkehrszugs.

### Vorbekannter Stand der Technik

Nahverkehrsschienenfahrzeuge, insbesondere U-Bahnen und S-Bahnen, werden vielfach über seitliche Stromschienen, die auch als dritte Schienen bezeichnet werden, mit elektrischer Energie versorgt. Zur Kontaktierung mit der seitlichen Stromschiene sind oft mehrere, seitlich am Schienenfahrzeug angeordnete Stromabnehmer vorgesehen, die als Seitenstromabnehmer bezeichnet werden. Durch die Verwendung mehrerer Seitenstromabnehmer pro Schienenfahrzeug kann zum einen der elektrische Stromfluss verteilt werden. Zum anderen kann ein derartiges Schienenfahrzeug auch kurze Lücken in der Stromschiene überbrücken, ohne dass die Versorgung des Schienenfahrzeugs mit elektrischer Energie unterbrochen wird. Außerdem kann das Schienenfahrzeug weiter mit elektrischer Energie versorgt werden, wenn ein Seitenstromabnehmer beschädigt oder sogar abgebrochen ist.

Seitenstromabnehmer sind oft nahe oder am Fahrgestell des Schienenfahrzeugs befestigt. Sie weisen typischerweise einen an einer Schwinge angebrachter Schleifschuh auf, der die Stromschiene seitlich, von oben oder von unten bestreicht und die elektrische Energie über eine flexible elektrische Leitung in das Schienenfahrzeug überträgt.

In einem Fehlerfall kann es vorkommen, dass sich im Bereich der Stromschiene ein mechanisches Hindernis befindet oder ein Schaden an der Stromschiene vorhanden ist. Um eine (weitere) Beschädigung der Stromschiene zu verhindern, können im Seitenstromabnehmer Sollbruchstellen vorhanden sein, an denen bspw. der Schleifschuh zusammen mit einem zwischen der Schwinge und dem Schleifschuh angeordneten Schleifschuhträger im Falle einer Kollision mit dem mechanischen Hindernis bzw. Schaden an der Stromschiene abreißen kann. Die abgerissenen Teile des Seitenstromabnehmers fallen dann unkontrolliert in das Gleisbett und können aufgrund ihrer kinetischen Energie Sachschäden, schlimmstenfalls sogar Personenschäden hervorrufen.

Zur Detektion eines Stromabnehmerabrisses wird in der WO 2014/005837 A2 ein elektrisch angetriebenes Schienenfahrzeug beschrieben, welches mindestens einen, im Fahrwerksbereich angeordneten Stromabnehmer und eine elektrische Leitung zwischen dem Stromabnehmer und einem Anschlusskasten aufweist, wobei im Verlauf der elektrischen Leitung eine Strommesseinrichtung angeordnet ist, welche den in der Leitung fließenden Strom bestimmt und ein der Stromstärke entsprechendes Signal an eine Auswerteeinrichtung übermittelt.

Die WO 2015110325 A1 beschreibt eine Überwachungseinrichtung für Stromabnehmer, wobei der Stromabnehmer an einem Fahrzeug befestigt ist und Kontaktmittel zur elektrischen Kontaktierung einer Fahrleitung umfasst, wobei die mechanische Verbindung zwischen den Kontaktmitteln und dem Fahrzeug mittels Verbindungselementen erfolgt, wobei entlang der Verbindungselemente zumindest ein mit einer Detektoreinheit verbundener Bruchsensor in der Weise verläuft, dass bei einer Beschädigung eines Verbindungselementes der Zustand des Bruchsensors in der Weise verändert wird, dass mittels Detektoreinheit die Beschädigung feststellbar ist und an ein mit der Detektoreinheit verbundenes Fahrerinformationssystem übermittelbar ist.

Außerdem wird in der AT 512 846 A1 ein Verfahren zur Stromabnehmerausfallüberwachung in einem Schienenfahrzeug beschrieben, in welchem jedes Fahrwerk einen links- und einen rechtsseitigen Stromabnehmer aufweist und wobei eine gemeinsame elektrische Leitung zwischen den Stromabnehmern und einer wagenkastenseitigen Sammelschiene in jeweils einer metallischen Führung geführt ist. Dabei wird die Temperatur jeder metallischen Führung ermittelt, bei Überschreiten einer bestimmten Temperatur einer metallischen Führung ein Signal abgegeben und das von dem Ausfall betroffene Fahrwerk durch eine Temperaturerhöhungen der metallischen Führungen zu den nichtbetroffenen Fahrwerken ermittelt.

Die EP0489614A1 beschreibt ein Schleifstück zur Abnahme von Strom, der über eine elektrifizierte Schiene zugeführt wird, insbesondere für ein rollendes Eisenbahnfahrzeug, mit einer Kontaktplatte, die auf die elektrische Schiene gedrückt wird, einem am Fahrzeug befestigten und an der Kontaktplatte befestigten Dämpfungsmittel, das aus zwei im Wesentlichen gleichen Tragelementen in Form eines Parallelepipeds besteht, die übereinander angeordnet und durch verformbare elastische Stücke verbunden sind. Die Stücke sind etwa rechteckige Platten und können unter Verbiegung arbeiten und auf allen Seiten der Tragelemente angeordnet sein, um die einander zugeordneten Seiten der Tragelemente unter Bildung von Distanzstücken zu verbinden. Die DE 15 13 621 A1 beschreibt einen Stromabnehmer für eine dritte Schiene mit an einer Schwinge angeordneten, an die dritte Schiene von Hand und bzw. oder ferngesteuert anlegbaren Schleifstücken, von denen der Strom durch ein Kabel entnommen wird, wobei die Schwinge als Isolator ausgebildet ist und das den Strom zum Motor bzw. Motorklemmbrett leitende Kabel als isoliertes Kabel direkt an dem Schleifstück angreift. Die US 5 669 472 A1 beschreibt eine Kontaktschuhanordnung für einen Zug, der entlang einer Tragschiene bewegbar ist, die eine elektrisch erregte Stromschiene aufweist, die sich im Wesentlichen parallel zu der Tragschiene erstreckt. Die Kontaktschuhanordnung umfasst ein Stützelement mit zwei voneinander beabstandeten Führungskanälen. Ein Haltearm ist zwischen den Führungskanälen positioniert und mit Kugellagern ausgestattet, die innerhalb der Führungskanäle rollen. Ein Kontaktschuh ist mit einem unteren sich nach außen erstreckenden Abschnitt des Haltearms zum Kontaktieren der Stromschiene verbunden. Eine Feder, die zwischen dem Stützelement und dem Haltearm angebracht ist, spannt den Kontaktschuh in einen nachgiebigen Eingriff mit der Stromschiene vor. Eine vertikale Bewegung des Haltearms, die auf eine variierende Höhe der Stromschiene reagiert, hält die Kontaktfläche des Kontaktschuhs horizontal und parallel zur Stromschiene. Diese parallele Anordnung reduziert den Verschleiß der Ausrüstung und stellt eine effektive Kraftübertragung auf den Zug sicher. Außerdem beschreibt die Druckschrift CN 205 130 955 U einen Pantograph-Stromabnehmer für einen U-Bahn-Zug. Eine elastische Hülse ist mit einem Zugrahmen verbunden. Eine Isolierplatte ist einseitig mit einem Kohlegleiter verbunden und auf der anderen Seite beidseitig mit einem jeweiligen Federhalter verbunden. Die Isolierplatte ist durch Verbindungsnute geschwächt. Eine U-förmige Schlitzverbindungsplatte ist an einem Ende mit einer Bohrung durch den Kohlegleiter und mit einem anderen Ende mit einer Verbindungsisolator-Übergangsplatte verbunden, wobei an der Verbindungsisolator-Übergangsplatte zwei Kabelverbindungsklemmen vorgesehen sind.

### Nachteile des Standes der Technik

Nachteil sämtlicher bisher bekannten Lösungen ist, dass zwar ein Ausfall eines Seitenstromabnehmers detektiert werden kann, Folgeschäden jedoch, die von einem Abriss eines Seitenstromabnehmerteils während der Fahrt verursachbar sind, dadurch nicht verhindert werden können.

Die aus der AT 512 846 A1 bekannte Lösung ist zudem nicht für Schienenfahrzeuge geeignet, die nur von einer seitlichen Stromschiene versorgt werden.

Außerdem kann aus dem gemessenen Stromfluss oder der Temperaturerhöhung nicht direkt auf einen Abbruch oder Abriss eines Seitenstromabnehmers oder Seitenstromabnehmerteils geschlossen werden, da jeweils Größen gemessen werden, die mit dem Stromfluss korrelieren, der jedoch auch aus anderen Gründen unterbrochen sein kann. So kann der Strom an einer anderen Stelle im Schienenfahrzeug unterbrochen sein oder die Stromunterbrechung durch eine Lücke in der Stromschiene, wie sie z.B. in Weichenbereichen vorkommen, verursacht sein. Dies macht die Abrissdetektion fehleranfällig.

Zudem sind die bisher bekannten Lösungen mit einem verhältnismäßig hohen technischen Aufwand verbunden.

### Problemstellung

Aufgabe der vorliegenden Erfindung ist es, Folgeschäden zu verhindern, die durch einen Abbruch eines Seitenstromabnehmerteils verursacht werden können.

Eine weitere Aufgabe der vorliegenden Erfindung ist es, eine einfache und zuverlässige Detektion eines Abrisses eines Seitenstromabnehmers oder eines Seitenstromabnehmerteils zu ermöglichen.

### Erfindungsgemäße Lösung

Die obige Aufgabe wird durch eine Seitenstromabnehmervorrichtung nach Anspruch 1 und ein Schienenfahrzeug nach Anspruch 11 gelöst.

Gemäß einer Ausführungsform hat eine Seitenstromabnehmervorrichtung für ein Schienenfahrzeug einen Seitenstromabnehmer mit einem schienenfahrzeugseitigen Endbereich und einem stromschienenseitigen Endbereich, der in einer im Wesentlichen starren Verbindung mit dem schienenfahrzeugseitigen Endbereich steht, und ein flexibles Halteelement, das derart angeordnet ist, dass der stromschienenseitige Endbereich über das flexible Halteelement an dem schienenfahrzeugseitigen Endbereich gehalten wird, wenn die im Wesentlichen starre Verbindung zwischen dem stromschienenseitigen Endbereich und dem schienenfahrzeugseitigen Endbereich getrennt ist.

Wenn ein Schienenfahrzeug, das mit einer derartigen Seitenstromabnehmervorrichtung ausgerüstet ist, während der Fahrt mit seinem Seitenstromabnehmer auf ein unvorhergesehenes, hinreichend stabiles mechanisches Hindernis oder eine entsprechende Beschädigung der Stromschiene trifft, so dass der stromschienenseitige Endbereich vom schienenfahrzeugseitigen Endbereich getrennt wird, z.B. abbricht oder abreißt, so kann der stromschienenseitige Endbereich vom flexiblem Halteelement am schienenfahrzeugseitigen Endbereich gehalten werden.

Somit können ein Verlust des stromschienenseitigen Endbereichs und Beschädigungen an umliegenden Einrichtungen am Fahrzeug bzw. entlang des Fahrweges vermieden werden.

Die Formulierung einer "im Wesentlichen starren Verbindung zwischen zwei Teilen oder Elementen", wie sie vorliegend verwendet wird, soll eine Verbindung zwischen den zwei Teilen oder Elementen beschreiben, die unter normalen Betriebsbedingungen gewährleistet, dass sich eine Lagebeziehung zwischen den zwei Teilen bzw. Elementen nicht ändert oder nur so geringfügig ändert, dass eine betriebsgemäße Funktion der miteinander verbundenen zwei Teile bzw. Elemente erhalten bleibt.

Typischerweise hat der Seitenstromabnehmer einen Stromabnehmerarm, der den schienenfahrzeugseitigen Endbereich bildet, einen Schleifschuhträger, der in einer starren Verbindung mit dem Stromabnehmerarm steht, und einen am Schleifschuhträger befestigten Schleifschuh.

Dabei steht der Schleifschuhträger typischerweise in einem flächigen Kontakt mit dem Stromabnehmerarm. Dies ermöglicht einen besonders niederohmigen Kontakt bzw. eine besonders niederohmige elektrische Verbindung zwischen dem Schleifschuh und einem typischerweise am Stromabnehmerarm bzw. zwischen dem Stromabnehmerarm und dem Schleifschuhträger befestigten Stromkabel. Dementsprechend weisen der Stromabnehmerarm und/oder der Schleifschuh typischerweise eine jeweilige Befestigungsvorrichtung für ein Stromkabel, insbesondere ein Starkstromkabel auf.

Der Stromabnehmerarm und der Schleifschuhträger bilden typischerweise eine Schwinge, derart, dass der Schleifschuh gefedert an einer Stromschiene geführt werden kann.

Der Schleifschuh und zumindest Teile des Schleifschuhträgers bilden typischerweise den stromschienenseitigen Endbereich des Seitenstromabnehmers.

Typischerweise ist das flexible Halteelement derart angeordnet, dass der Schleifschuhträger vom flexiblen Halteelement am Stromabnehmerarm gehalten werden kann, wenn der stromschienenseitige Endbereich vom schienenfahrzeugseitigen Endbereich getrennt ist, bzw. wenn die starre Verbindung unterbrochen ist. Dadurch kann auch vermieden werden, dass das am Stromabnehmerarm bzw. zwischen dem Stromabnehmerarm und dem Schleifschuhträger befestigte Stromkabel beschädigt oder abgerissen wird.

Beispielsweise kann das flexible Halteelement durch eine Öffnung im Stromabnehmerarm und/oder eine Öffnung im Schleifschuhträger geführt sein. Alternativ kann das flexible Halteelement als Fangseil ausgestaltet sein, das auf dem Stromabnehmerarm sowie auf dem Schleifschuhträger befestigt wird. Das flexible Halteelement kann auf dem Stromabnehmerarm und/oder dem Schleifschuhträger formschlüssig befestigt sein. Zur Befestigung des Halteelementes können an seinen Enden Ösen vorgesehen sein, durch die beispielsweise Bolzen oder Schrauben geführt werden, um das Halteelement mit dem Stromabnehmerarm und/oder Schleifschuhträger zu verbinden.

Idealerweise ist das Halteelement so lang wie der Abstand zwischen den Befestigungspunkten am stromschienenseitigen und an dem schienenfahrzeugseitigen Endbereich, die durch das Halteelement miteinander verbunden werden, oder nur geringfügig länger. Bevorzugt ist das Halteelement maximal 1,5 mal so lang wie der Abstand zwischen den Befestigungspunkten.

Gemäß einer bevorzugten Ausführung können zwei Halteelemente vorgesehen sein, um den Bewegungsspielraum des Schleifschuhträgers nach einer Trennung der Verbindung zwischen dem stromschienenseitigen Endbereich und dem schienenfahrzeugseitigen Endbereich weiter einzuschränken. Indem zwei Halteelemente verwendet werden, werden mögliche Drehbewegungen eines abgerissenen, schienenfahrzeugseitigen Endbereichs verringert.

Typischerweise weist das flexible Halteelement ein Seil, ein Band, eine Kette und/oder eine Feder auf.

Damit das flexible Halteelement eine hinreichend große Zugkraft von bspw. zumindest etwa 1 kN aufnehmen kann, bestehen seine zugkraftaufnehmenden Komponenten aus hinreichend zugfesten aber flexiblen Materialien wie Stahl oder einem geeigneten Kunstfasermaterial wie z.B. Kevlar.

Beispielsweise kann das flexible Halteelement von einem flexiblen Stahlseil gebildet werden oder dieses zumindest aufweisen, z.B. in Verbindung mit einer Metallfeder und/oder als umhüllte Stahlseele. So kann das flexible Halteelement von einem Bowdenzug, wie er für Bremssysteme von Fahrrädern oder Mopeds verwendet wird, gebildet werden bzw. aufweisen. Dies ermöglicht zudem eine besonders kostengünstige Herstellung des Seitenstromabnehmers bzw. Nachrüstung bereits vorhandener Seitenstromabnehmer, da handelsübliche Komponenten verwendet werden können.

Gemäß einer Weiterbildung der Erfindung, deren zusätzliche Merkmale auch ohne die bisher genannten in einem verbesserten Seitenstromabnehmer Anwendung finden können, weist der Seitenstromabnehmer weiter ein Verbindungselement mit einem ersten Ende, das mit dem stromschienenseitigen Endbereich verbunden ist, und eine Schaltvorrichtung auf. Die Schaltvorrichtung ist lagefixiert zu dem schienenfahrzeugseitigen Endbereich angeordnet und mit einem zweiten Ende des Verbindungselements verbunden, wobei sich ein Schaltzustand der Schaltvorrichtung ändert, wenn die im Wesentlichen starre Verbindung zwischen dem stromschienenseitigen Endbereich und dem schienenfahrzeugseitigen Endbereich getrennt wird und der abgetrennte stromschienenseitige Endbereich über das Verbindungselement eine Zugkraft auf die Schaltvorrichtung ausübt.

Wenn ein Schienenfahrzeug, das mit einer derartigen Seitenstromabnehmervorrichtung ausgerüstet ist, wobei der schienenfahrzeugseitige Endbereich und die Schaltvorrichtung der Seitenstromabnehmervorrichtung lagefixiert mit einem Fahrgestell des Schienenfahrzeugs verbunden sind, während der Fahrt mit seinem Seitenstromabnehmer auf ein unvorhergesehenes, hinreichend stabiles mechanisches Hindernis oder eine entsprechende Beschädigung der Stromschiene trifft, so dass der stromschienenseitige Endbereich vom schienenfahrzeugseitigen Endbereich getrennt wird, z.B. abbricht oder abreißt, so kann vom abgetrennten stromschienenseitigen Endbereich in Folge seiner Fallbewegung über das Verbindungselement eine Zugkraft auf die Schaltvorrichtung ausgeübt werden, die zu einer Änderung des Schaltzustands der Schaltvorrichtung führt. Auf diese Weise lässt sich ein Abbruch bzw. Abriss des stromschienenseitigen Endbereichs des Seitenstromabnehmers einfach und zuverlässig detektieren. Da der Abbruch bzw. Abriss des stromschienenseitigen Endbereichs direkt detektierbar ist, wird eine größere Detektionssicherheit erreicht als bei indirekten Messungen. Wenn der Seitenstromabnehmer und die Schaltvorrichtung unabhängig voneinander am Fahrgestell befestigt sind, so kann auch ein Abbruch bzw. Abriss eines kompletten Seitenstromabnehmers detektiert werden.

Die Schaltvorrichtung hat typischerweise ein Gehäuse und einen relativ zum Gehäuse bewegbares Betätigungselement wie einen Stößel oder Stift, z.B. einen federbelasteten Stift, an dem der zweite Endbereich des flexiblen Verbindungselements befestigt ist. Beispielsweise kann die Schaltervorrichtung ein Seilzugschalter sein.

Typischerweise ist die starre Verbindung mittels eines Befestigungsmittels ausgeführt, das eine Sollbruchstelle aufweist, derart, dass der Schleifschuhträger zusammen mit dem Schleifschuh vom Stromabnehmerarm abreißt, wenn eine hinreichend große Kraft auf den Schleifschuh einwirkt. In diesen Fall wird die im Wesentlichen starre Verbindung zwischen dem stromschienenseitigen Endbereich und dem schienenfahrzeugseitigen Endbereich getrennt und der abgetrennte stromschienenseitige Endbereich übt über das Verbindungselement eine Zugkraft auf die Schaltvorrichtung aus, wodurch der Schaltzustandes der Schaltvorrichtung geändert werden kann.

Am Stromabnehmerarm kann ein Führungselement zum Führen des Verbindungselements befestigt sein. Dadurch kann eine definiertere Änderung des Schaltzustandes der Schaltvorrichtung und damit eine noch genauere Abbruchs- bzw. Abrissdetektion erreicht werden. Das Führungselement kann bspw. als Rohr oder Kanal ausgeführt sein bzw. ein Rohr oder einen Kanal aufweisen.

Das Verbindungselement kann ein zumindest im Wesentlichen starres Verbindungselement sein, bspw. eine Stange, aber auch ein flexibles Verbindungselement. Beispielsweise kann das flexible Verbindungselement fadenförmig oder bandförmig sein. und

Außerdem steht das Verbindungselement in einem betriebsbereiten Zustand der Seitenstromabnehmervorrichtung typischerweise zumindest im Wesentlichen nicht unter einer Zugspannung, d.h. nicht oder nur unter einer geringfügigen Zugspannung, bspw. einer vom Eigengewicht des Verbindungselements verursachten Zugspannung. Im Vergleich mit einem unter Zugspannung stehenden Verbindungselement wird der Montageaufwand typischerweise verringert.

Außerdem haben Seitenstromabnehmervorrichtung mit unter Zugspannung stehenden Verbindungselementen typischerweise höhere Anforderungen an Toleranzen.

Es kann sogar vorgesehen sein, dass das Verbindungselement im betriebsbereiten Zustand der Seitenstromabnehmervorrichtung ein geringfügiges Spiel von bspw. mehr als einem Millimeter, mehreren Millimetern oder sogar bis zu einigen Zentimetern hat. Dadurch kann besonders einfach verhindert werden, dass sich der Schaltzustand der Schaltvorrichtung bereits ändert, wenn sich eine Lagebeziehung zwischen stromschienenseitigem Endbereich und schienenfahrzeugseitigem Endbereich nur unwesentlich ändert, z.B. durch eine geringfügige Auslenkung des stromschienenseitigen Endbereichs.

Typischerweise ist das flexible Verbindungselement elektrisch isolierend. Damit wird sichergestellt, dass über das Verbindungselement auch mit abgetrennten stromschienenseitigem Endbereich keine ungewollte elektrische Verbindung zwischen der typischerweise mit hohen Spannungen beaufschlagten Stromschiene und dem Schienenfahrzeug bzw. dessen Elektronik, insbesondere der Steuerung und der Schaltvorrichtung zustande kommt. Beispielsweise kann das Verbindungselement als Angelsehne oder Glasfaserseele ausgeführt sein.

Auch wenn das flexible Halteelement in der Lage ist, hinreichende große Zugkräfte aufzunehmen, kann die Erhöhung der Masse des Seitenstromabnehmers durch das flexible Verbindungselement, das flexible Halteelement selbst inklusive Führungselement deutlich unter 10% der Gesamtmasse von Stromabnehmerarm und Schleifschuhträger (Masse der Schwinge) gehalten werden. Daher werden die mechanischen Eigenschaften der Schwinge bereits vorhandener Seitenstromabnehmer durch Nachrüsten mit dem flexiblen Verbindungselement, dem flexiblen Halteelement und/oder dem Führungselement nur unwesentlich verändert. Auch bleibt dabei der Lichtraum der Schwinge praktisch unverändert.

Weiterhin kann die Länge des Verbindungselements und die Länge des flexiblen Halteelements so aufeinander abgestimmt sind, dass durch das flexible Halteelement ein Abreißen des Verbindungselements verhindert wird, wenn die Verbindung zwischen dem stromschienenseitigen Endbereich und dem schienenfahrzeugseitigen Endbereich getrennt wird. Eine Beschädigung des Verbindungselements und der Schaltvorrichtung kann damit zuverlässig vermieden werden.

Außerdem kann vorgesehen sein, dass das Verbindungselement das flexible Halteelement bildet. Beispielsweise kann das Verbindungselement und das flexible Halteelement von einem Seil gebildet werden, z.B. einem Seil aus Kevlar, dass durch ein Führungselement (z.B. eine Führungsrohr) geführt wird und dass mit einem Stopper, der nicht durch das Führungselement hindurch passt, fest verbundenen ist. Dabei ist der Stopper typischerweise so zwischen dem Führungselement und dem zweiten Ende des Verbindungselements (und damit der Schaltvorrichtung) angeordnet ist, dass zwar der Schaltzustand der Schaltvorrichtung geändert werden kann, wenn stromschienenseitiger Endbereich und schienenfahrzeugseitigen Endbereich voneinander getrennt werden, eine Beschädigung des Verbindungselements und ein Abreißen des Verbindungselements von der Schaltvorrichtung aber vermieden wird und der stromschienenseitige Endbereich über das Seil und den Stopper am schienenfahrzeugseitigen Endbereich gehalten wird.

Gemäß einer Ausführungsform hat ein Schienenfahrzeug ein Fahrgestell und mindestens eine Seitenstromabnehmervorrichtung aufweisend: einen Seitenstromabnehmer mit einem schienenfahrzeugseitigen Endbereich, der an dem Fahrgestell befestigt ist, und einem stromschienenseitigen Endbereich, der in einer im Wesentlichen starren Verbindung mit dem schienenfahrzeugseitigen Endbereich steht, und ein flexibles Halteelement, das derart angeordnet ist, dass der stromschienenseitige Endbereich über das flexible Halteelement an dem schienenfahrzeugseitigen Endbereich gehalten wird, wenn die im Wesentlichen starre Verbindung zwischen dem stromschienenseitigen Endbereich und dem schienenfahrzeugseitigen Endbereich getrennt ist.

Wenn eine starre Verbindung zwischen einem Schleifschuhträger und einem Stromabnehmerarm des Seitenstromabnehmers unterbrochen ist, z.B. wenn der Schleifschuhträger zusammen mit einem Schleifschuh vom Stromabnehmerarm abreißt, können der Schleifschuhträger und der Schleifschuh mittels des flexiblen Halteelements oberhalb eines Gleisbetts gehalten werden. Dadurch lassen sich Personenschäden und weitere Beschädigungen am Schienenfahrzeug bzw. der Stromschiene, die von unkontrolliert abreißenden Teilen des Seitenstromabnehmers verursacht werden könnten, sogar während einer fortgesetzten Fahrt vermeiden.

Alternativ oder ergänzend zum flexiblen Halteelement kann die mindestens eine Seitenstromabnehmervorrichtung ein Verbindungselement mit einem ersten Ende, das mit dem stromschienenseitigen Endbereich verbunden ist, und eine Schaltvorrichtung aufweisen, die lagefixiert zu dem schienenfahrzeugseitigen Endbereich angeordnet ist und mit einem zweiten Ende des flexiblen Verbindungselements verbunden ist, wobei sich ein Schaltzustand der Schaltvorrichtung ändert, wenn die im Wesentlichen starre Verbindung zwischen dem stromschienenseitigen Endbereich und dem schienenfahrzeugseitigen Endbereich getrennt wird und der abgetrennte stromschienenseitige Endbereich über das Verbindungselement eine Zugkraft auf die Schaltvorrichtung ausübt.

Typischerweise ist die Seitenstromabnehmervorrichtung in einem Fahrwerksbereich des Schienenfahrzeugs angeordnet, noch typischer nahe einer Drehachse eines Drehgestells des Schienenfahrzeugs.

Dabei ist typischerweise ein den schienenfahrzeugseitigen Endbereich bildender Stromabnehmerarm der Seitenstromabnehmervorrichtung direkt an dem Fahrgestell befestigt. Die Schaltvorrichtung kann in diesem Ausführungsbeispiel ebenfalls direkt an dem Fahrgestell oder an dem schienenfahrzeugseitigen Endbereich befestigt sein.

Das Schienenfahrzeug weist typischerweise ein mit der Schaltvorrichtung verbundenes Steuersystem auf, das eine Änderung des Schaltzustands der Schaltvorrichtung detektieren und/oder auf einer Anzeige wiedergeben kann.

Bei dem Schienenfahrzeug kann es sich um einen elektrisch angetriebenen (antreibbaren) Triebwagen für einen Nahverkehrszug handeln, bspw. um einen gleichstromangetriebenen S-Bahn-Triebwagen oder einen gleichstromangetriebenen U-Bahn-Triebwagen.

Gemäß einer weiteren Ausführungsform weist ein Seitenstromabnehmer einen schienenfahrzeugseitigen Endbereich, einen stromschienenseitigen Endbereich, der in einer im Wesentlichen starren Verbindung mit dem schienenfahrzeugseitigen Endbereich steht, und ein flexibles Halteelement auf. Dabei ist das flexibles Halteelement derart angeordnet, dass der stromschienenseitige Endbereich über das flexible Halteelement an dem schienenfahrzeugseitigen Endbereich gehalten wird, typischerweise oberhalb eines Gleisbettes, wenn die im Wesentlichen starre Verbindung zwischen dem stromschienenseitigen Endbereich und dem schienenfahrzeugseitigen Endbereich getrennt ist.

Ein Schienenfahrzeug, das mit einer oder mehreren derartigen Seitenstromabnehmervorrichtungen ausgerüstet ist, ist zumindest weitgehend vor Folgeschäden geschützt, die von unkontrolliert abreißenden Teilen des Seitenstromabnehmers verursacht werden könnten. Zudem lässt sich auch das Risiko von Personenschäden zumindest stark reduzieren.

Beispielsweise kann das flexible Halteelement mittels eines Seils, z.B. eines Stahlseils, ausgeführt sein. Durch eine zweistufige Befestigung des Seils zwischen dem stromschienenseitigen Endbereich und dem schienenfahrzeugseitigen Endbereich, bei der das Seil bei sehr harten Schlägen auf den schienenfahrzeugseitigen Endbereich weiter nachgibt, kann erreicht werden, das ein abgebrochener stromschienenseitiger Endbereich auch bei sehr harten Schlägen nicht verloren geht.

Typischerweise ist zwischen dem schienenfahrzeugseitigen Endbereich und dem stromschienenseitigen Endbereich eine Sollbruchstelle vorgesehen, so dass im Fehlerfall einer Kollision des stromschienenseitigen Endbereichs mit einem mechanischen Hindernis ein definierter Teil des Seitenstromabnehmers abreißt bzw. abbricht, aber weiter durch das flexible Halteelement am Schienenfahrzeug gehalten wird.

Durch das flexible Halteelement kann eine Verliersicherung bereitgestellt werden, die zu keiner Behinderung der Sollbruchstelle führt.

Gemäß einer weiteren Weiterbildung ist der Seitenstromabnehmer Teil einer Seitenstromabnehmervorrichtung für Schienenfahrzeuge, die weiter ein flexibles Verbindungselement mit einem ersten Ende, das mit dem schienenfahrzeugseitigen Endbereich verbunden ist, und eine Schaltvorrichtung aufweist, die lagefixiert zu dem schienenfahrzeugseitigen Endbereich angeordnet ist und mit einem zweiten Ende des flexiblen Verbindungselements verbunden ist, derart, dass sich ein Schaltzustand der Schaltvorrichtung ändert, wenn die im Wesentlichen starre Verbindung zwischen dem stromschienenseitigen Endbereich und dem schienenfahrzeugseitigen Endbereich getrennt wird und der abgetrennte stromschienenseitige Endbereich über das flexible Verbindungselement eine Zugkraft auf die Schaltvorrichtung ausübt.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.
Figur 1A zeigt eine schematische Vorderansicht eines Seitenstromabnehmers einer Seitenstromabnehmervorrichtung für ein Schienenfahrzeug gemäß einer Ausführungsform.
Figur 1B zeigt eine schematische Seitenansicht einer Seitenstromabnehmervorrichtung mit dem in Figur 1A gezeigten Seitenstromabnehmer gemäß einer Ausführungsform.
Figur 1C zeigt eine schematische Seitenansicht eines Schienenfahrzeugs mit mehreren der in Figur 1B gezeigten Seitenstromabnehmervorrichtungen gemäß einer Ausführungsform.
Figur 2A zeigt eine schematische Vorderansicht eines Seitenstromabnehmers einer Seitenstromabnehmervorrichtung für ein Schienenfahrzeug gemäß einer Ausführungsform.
Figur 2B zeigt eine schematische Seitenansicht einer Seitenstromabnehmervorrichtung mit dem in Figur 2A gezeigten Seitenstromabnehmer gemäß einer Ausführungsform.
Figur 3A zeigt eine schematische Rückansicht eines Seitenstromabnehmers einer Seitenstromabnehmervorrichtung für ein Schienenfahrzeug gemäß einer Ausführungsform.
Figur 3B zeigt eine schematische Seitenansicht einer Seitenstromabnehmervorrichtung mit dem in Figur 3A gezeigten Seitenstromabnehmer gemäß einer Ausführungsform.
Figur 4 zeigt eine schematische Rückansicht eines Seitenstromabnehmers einer Seitenstromabnehmervorrichtung für ein Schienenfahrzeug gemäß noch einer Ausführungsform.

### Ausführungsbeispiele

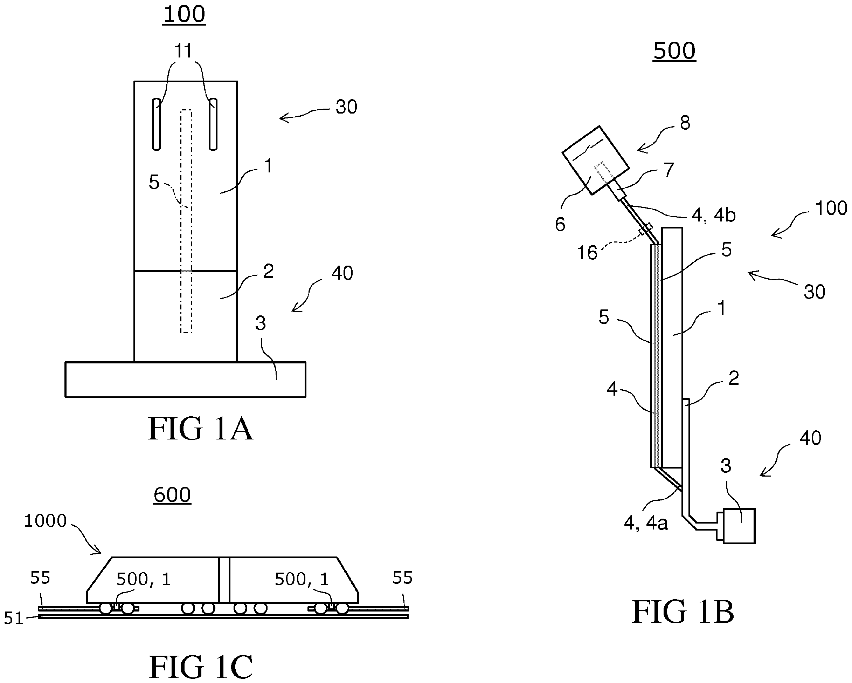

Figur 1 zeigt in einer Vorderansicht einen Seitenstromabnehmer 100 mit einem Stromabnehmerarm 1, einem Schleifschuhträger 2, der in einer starren Verbindung mit dem Stromabnehmerarm 1 steht, und mit einem Schleifschuh 3, der am Schleifschuhträger 2 befestigt ist.

Der Stromabnehmerarm 1 und der Schleifschuhträger 2 können jeweils aus plattenförmigen Körpern gefertigt sein. Dies erleichtert die typischerweise flächige Verbindung zwischen Stromabnehmerarm 1 und Schleifschuhträger 2.

Dabei besteht der Stromabnehmerarm 1 typischerweise aus einem stabilen, elastischen Material wie bspw. glasfaserverstärktem Kunststoff. Dies ermöglicht den Schleifschuh 3 während der Fahrt eines Schienenfahrzugs gefedert an einer Stromschiene entlang zu führen.

Der Schleifschuhträger 2 besteht typischerweise aus einem Metall wie Stahl oder Aluminium, um bei hinreichender mechanischer Stabilität einen Stromfluss mit geringem Widerstand vom Schleifschuh 3 zu einem zwischen dem Schleifschuhträger 2 und dem Stromabnehmerarm 1 geklemmten Kabel (nicht dargestellt) zu ermöglichen.

In dem exemplarischen Ausführungsbeispiel hat der Stromabnehmerarm 1 in einem oberen (vom Schleifschuhträger 2 abgewandten) Bereich 30 zwei schlitzförmige Öffnungen 11. Mittels nichtdargestellter, durch die Öffnungen 11 geführter Schrauben kann der Stromabnehmerarm 1 an einem Fahrgestell eines Schienenfahrzeugs befestigt werden. Der Bereich 30 stellt damit einen schienenfahrzeugseitigen Endbereich 30 des Stromabnehmerarms 1 dar, während der Schleifschuh 3 und der Schleifschuhträger 2 bzw. zumindest ein unterer (zum Schleifschuh 3 gewandter) Teil des Schleifschuhträgers 2 einen stromschienenseitigen Endbereichs 40 des Stromabnehmerarms 1 bilden.

Auf der Rückseite des Stromabnehmerarms 1 kann ein optionales isoliertes Führungsrohr 5 befestigt sein, dass einen Führungskanal zum besseren Führen eines in Figur 1B dargestellten flexiblen Verbindungselements 4 bereitstellt. Statt eines Führungsrohrs können auch mehre Rohrabschnitte oder Führungsschlaufen verwendet werden.

Wie der schematischen Seitenansicht der Figur 1B zu entnehmen ist, ist ein unteres (erstes) Ende 4a des flexiblen Verbindungselements 4 mit dem Schleifschuhträger 2 und damit mit dem stromschienenseitigen Endbereich 40 verbunden, z.B. mittels einer Klebverbindung und/oder einer nicht dargestellten Klemmschraube. Außerdem ist das typischerweise als nicht elektrisch leitendes Seil oder Sehne ausgeführte Verbindungselement 4 durch das Führungsrohr 5 geführt und mit seinem oberen Ende (zweiten Ende) 4b mit einem Stift 7 eines Seilzugschalters 8 verbunden. Beispielsweise kann eine handelsübliche Angelsehne als flexibles Verbindungselement 4 verwendet werden.

In dem in Fig. 1B dargestellten exemplarischen Ausführungsbeispiel bilden der Seitenstromabnehmer 100, der Seilzugschalter 8, das Verbindungselement 4 und das Führungsrohr 5 eine Seitenstromabnehmervorrichtung 500.

Wenn der Seitenstromabnehmer 100 und der Seilzugschalter 8 an einem Fahrgestell eines Schienenfahrzeugs angeschraubt oder anderweitig befestigt sind, kann im Falle einer Kollision des Seitenstromabnehmers 100 mit einem Hindernis ein möglicher Abriss des Schleifschuhträgers 2 oder sogar des gesamten Seitenstromabnehmers 100 detektiert werden, da das Verbindungselements 4 während und/oder nach dem Abriss am Stift 7 zieht und diesen relativ zum Gehäuse 6 des Seilzugschalters 8 bewegt, wodurch ein typischerweise von einer Steuerung überwachter Schaltzustand des Seilzugschalters 8 verändert wird.

Der Stromabnehmerarm 1 kann, wie in Fig. 1B dargestellt ist, zwischen dem Führungsrohr 5 und dem Schleifschuhträger 2 angeordnet sein.

In einem alternativen (nicht dargestellten) Ausführungsbeispiel ist der Schalter 8 am schienenfahrzeugseitigen Endbereich 30 des Stromabnehmerarms 1 befestigt, z.B. angeschraubt oder aufgeklebt. In diesem Ausführungsbeispiel kann ein Abriss des Schleifschuhträgers 2 vom Stromabnehmerarm 1 über den geänderten Schaltzustand des Schalters 8 detektiert werden. Da ein Abriss des Schleifschuhträgers 2 vom Stromabnehmerarm 1 deutlich häufiger auftritt als ein kompletter Verlust des Seitenstromabnehmers 100 bzw. dies durch die Integration einer Sollbuchstelle in der Verbindung zwischen Schleifschuhträger 2 und Stromabnehmerarm 1 sogar so konfiguriert ist, können zumindest die meisten der Abrisse auf Grund von unvorhergesehenen Kollisionen des Stromabnehmers 100 auch in diesem Ausführungsbeispiel auf einfache Weise sicher detektiert werden.

Figur 1C zeigt eine Seitenansicht eines Schienenfahrzeugs 600, das auf eine Schiene 51 eines Verkehrssystems 1000 aufgesetzt ist. Bei dem Schienenfahrzeug 600 handelt es sich um einen elektrisch angetriebenen Triebwagen eines Nahverkehrssystems 1000, z.B. ein S-Bahn-Triebwagen oder ein U-Bahn-Triebwagen. Es kann sich aber auch um ein anderes elektrisch angetriebenes Schienenfahrzeug handeln. Das Nahverkehrssystems 1000 hat zudem eine Stromschiene 55 zur elektrischen Versorgung des Triebwagens 600. Zur besseren Übersichtlichkeit ist der Triebwagen 600 beim Überfahren einer Unterbrechung (Lücke) der Stromschiene 55 dargestellt. Außerdem ist nur einer von typischerweise mehreren Triebwagen 600 dargestellt.

Da der Triebwagen 600 sowohl im vorderen als auch im hinteren Wagenteil jeweils eine Seitenstromabnehmervorrichtung 500 hat, die mit der Stromschiene 55 kontaktiert (kontaktierbar) sind und deren Abstand geringe als die Länge der Lücke ist, kann der Triebwagen 600 die Lücke der Stromschiene 55 überfahren, ohne das seine elektrische Stromversorgung unterbrochen wird.

Bei der Seitenstromabnehmervorrichtungen 500 kann es sich um Seitenstromabnehmervorrichtungen 500 handeln, wie sie oben mit Bezug zur Fig. 1B erläutert wurden. Aus Gründen der Übersichtlichkeit sind in dem in Fig. 1C dargestellten exemplarische Ausführungsbeispiel Fig. 1C jeweils nur die Stromabnehmerarme 1 der Seitenstromabnehmer 500 gezeigt, die sich an der zur Stromschienen 55 zugewandten Seite des Triebwagens 600 befinden.

Der Triebwagen 600 kann aber auf beiden Fahrzeugseiten jeweils einen oder mehrere Seitenstromabnehmer aufweisen, selbst wenn er für eine elektrische Gleichstromversorgung eingerichtet ist und nur eine Versorgungsstromschiene 55 benötigt wird (wobei die Schienen 51 als Masse dienen).

Auch in diesem Fall sind die Stromschienen 55 aus Sicherheitsgründen häufig beidseitig der Gleise 51 angeordnet, jedoch abwechselnd. In Haltestellenbereichen sind die Stromschienen 55 auf der dem Bahnsteig abgewandten Seite und damit von den Passagieren entfernt angeordnet. Außerhalb von Haltestellen sind die Stromschienen 55 dann zwischen den beiden Gleisen 51 angeordnet. Das hat den Vorteil, dass die Stromschienen 55 für die beiden Fahrtrichtungen außerhalb von Haltestellen benachbart liegen und es dort zwischen den Gleisen nur einen Hochspannungsraum gibt.

In dem in Fig. 1C dargestellten exemplarische Ausführungsbeispiel sind die Seitenstromabnehmervorrichtungen 500 jeweils nahe einer Drehachse eines Drehgestells des Triebwagens 600 angeordnet. Dies erleichtert das Halten des elektrischen Kontakts zur Stromschiene 55 in Kurven.

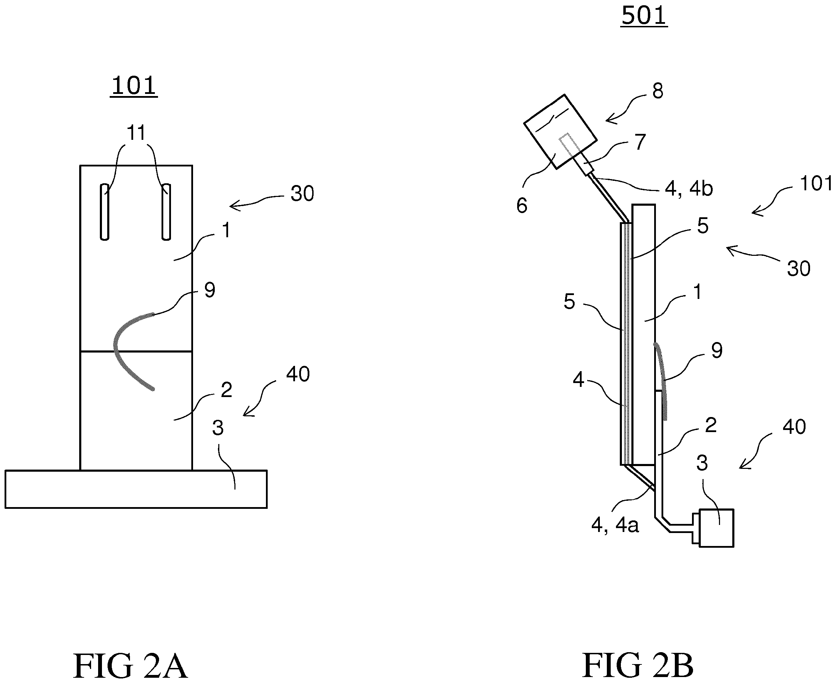

Figur 2A zeigt eine schematische Vorderansicht eines Seitenstromabnehmers 101 für ein Schienenfahrzeug, wie es oben mit Bezug zur Fig. 1C erläutert wurde.

Der Seitenstromabnehmer 101 hat, ähnlich wie der oben mit Bezug zur Fig. 1A erläuterte Seitenstromabnehmer 101, einen Stromabnehmerarm 1, der den schienenfahrzeugseitigen Endbereich 30 bildet, einen Schleifschuhträger 2, der in einer starren Verbindung mit dem Stromabnehmerarm 1 steht und einen am Schleifschuhträger 2 befestigten Schleifschuh 3, der zusammen mit dem Schleifschuhträger 2 eine stromschienenseitigen Endbereichs 40 Seitenstromabnehmers 101 bildet. Auf Grund der starren Verbindung zwischen Stromabnehmerarm 1 und Schleifschuhträger 2 ist der stromschienenseitige Endbereich 30 in einer starren Verbindung mit dem schienenfahrzeugseitigen Endbereich 40.

Außerdem ist ein flexibles Halteelement 9 derart zwischen dem stromschienenseitigen Endbereich 40 (Schleifschuhträger 2, Schleifschuh 3) und dem schienenfahrzeugseitigen Endbereich 30 (Stromabnehmerarm 1) angeordnet, dass der schienenfahrzeugseitigen Endbereich 30 vom flexiblen Halteelement 9 oberhalb eines Gleisbettes am schienenfahrzeugseitigen Endbereich 30 gehalten wird, wenn die starre Verbindung zwischen dem stromschienenseitigen Endbereich 40 und dem schienenfahrzeugseitigen Endbereich 30 durch einen unvorhergesehene Aufprall getrennt wird.

Das flexible Halteelement 9 kann auf vielfältige Weise realisiert werden. Beispielsweise kann das flexibles Halteelement 9 ein Edelstahlseil sein, dass jeweils mit dem Stromabnehmerarm 1 (schienenfahrzeugseitigen Endbereich 30) und dem Schleifschuhträger 2 (stromschienenseitigen Endbereich 40) fest verbunden ist, z.B. verschraubt. Als geschlossenes Seil, könnte das Seil 9 aber auch nur durch jeweilige Öffnungen im Stromabnehmerarm 1 und Schleifschuhträger 2 geführt sein. Auch könnte das das Seil 9 nur mit dem Stromabnehmerarm 1 fest verbunden sein und durch Öffnungen im Schleifschuhträger 2 geführt sein (oder umgekehrt). Anstelle eines Seils kann zudem auch eine Kette oder ein Band als flexibles Halteelement 9 verwendet werden. Auch kann das flexible Halteelement 9 aus einem anderen hinreichend stabilen Material wie bspw. Kevlar bestehen.

Wie der der schematischen Seitenansicht von Figur 2B zu entnehmen ist, kann der Schleifschuhträger 2 (am stromschienenseitigen Endbereich 40) des Seitenstromabnehmer 101 als Teil einer Seitenstromabnehmervorrichtung 501 zudem mit einem zweiten Ende 4b eines flexiblen Verbindungselements 4 verbunden sein, so dass ein Schalter 8 betätigt wird, wenn der Schleifschuhträger 2 von dem Stromabnehmerarm 1 getrennt wird (abreißt).

In dieser Ausführungsform kann ein Abriss von Schleifschuhträger 2 und Schleifschuh 3 vom Stromabnehmerarm 1 sowohl von einer Schienenfahrzeugsteuerung einfach und zuverlässig detektiert werden, als auch Folgeschäden eines unkontrollierten Abrisses zuverlässig vermieden werden.

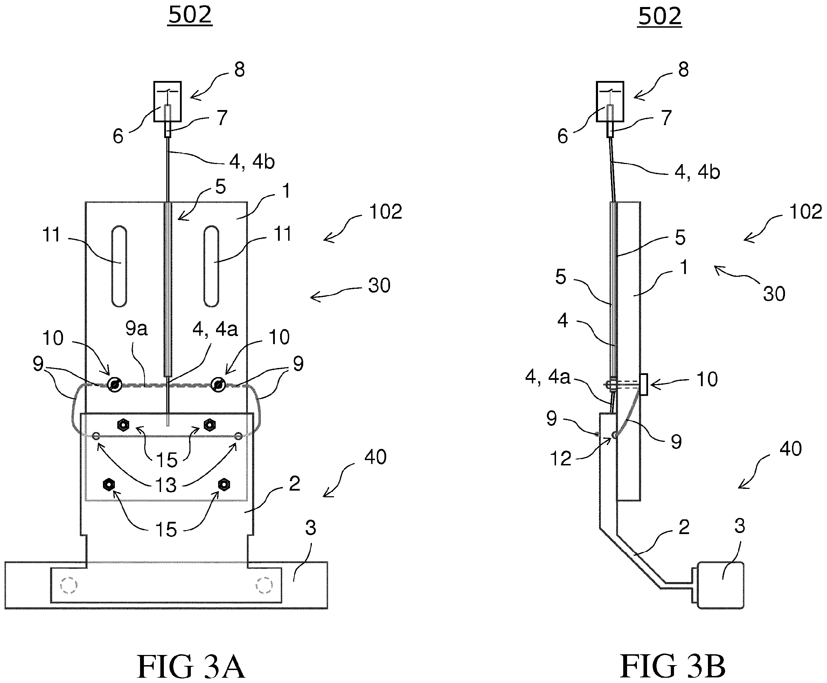

Figur 3A zeigt eine schematische Rückansicht und Figur 3B eine schematische Seitenansicht eines Seitenstromabnehmers 102 einer Seitenstromabnehmervorrichtung 502 für ein Schienenfahrzeug. Der Seitenstromabnehmer 102 ist ähnlich zu dem mit Bezug zu den Figuren 2A, 2B erläuterten Seitenstromabnehmer 101 und verfügt ebenfalls über ein flexibles Halteelement 9, das als Seil aus Stahl oder Kevlar ausgeführt ist.

In den in den Figuren 3A, 3B dargestellten exemplarischen Ausführungsbeispiel ist das Seil 9 durch zwei Öffnungen 13 im Schleifschuhträger 2 geführt und mit zwei Klemmschrauben 10 an dem Stromabnehmerarm 1 fixiert (doppelt eingespannt).

Da der Schleifschuhträger 2 im flächigen Kontakt mit dem im Kontaktbereich etwas schmaleren Stromabnehmerarm 1 steht, wird das Seil 9 zudem durch zwei Kanalabschnitte 12 geführt, die zwischen dem Stromabnehmerarm 1 und dem Schleifschuhträger 2 gebildet sind und an die Öffnungen 13 angrenzen.

Im intakten Zustand des Seitenstromabnehmers 102 wird die feste Verbindung und der flächigen Kontakt zwischen Stromabnehmerarm 1 und Schleifschuhträger 2 durch beispielhafte vier Schrauben 15 (nur in Fig. 3A gezeigt) aufrecht erhalten, die jeweils eine Sollbruchstelle aufweisen.

Wenn auf Grund einer Kollision während der Fahrt eines mit dem Seitenstromabnehmer 102 ausgerüsteten Schienenfahrzeugs eine hinreichend große Kraft zwischen Stromabnehmerarm 1 und Schleifschuhträger 2 wirkt, geben die Schrauben 15 nach, womit die feste Verbindung unterbrochen ist. Schleifschuhträger 2 und Schleifschuh 3 werden in Richtung Gleisbett bewegt, lösen dabei über das flexible Verbindungselement 4 den Schalter 8 aus, werden dann jedoch vom Seil 9 am Stromabnehmerarm 1 gehalten. Dadurch wird der unkontrollierte Abriss verhindert. Durch den symmetrischen Aufbau mit zwei Schrauben 10 können Schleifschuhträger 2 und Schleifschuh 3 während der Fahrt relativ ruhig gehalten werden, auch wenn sie nicht mehr fest mit dem Stromabnehmerarm 1 verbunden sind.

Die Klemmung des Seils 9 mittels der Klemmschrauben 10 ist typischerweise so ausgeführt, dass die Klemmschrauben 10 bei einer sehr großen Kraft weiteres Seil eines zwischen den Klemmschrauben 10 befindlichen Reserveabschnitts 9a nachgeben können. Dadurch wird sichergestellt, dass Schleifschuhträger 2 und Schleifschuh 3 auch bei sehr großen Kollisionskräften nicht verloren werden.

Die Gesamtlänge des Seils 9 ist typischerweise so ausgeführt, dass Schleifschuhträger 2 und Schleifschuh 3 auch dann nicht mit dem Gleisbett und den Schienen in Berührung kommen, wenn der Reserveabschnitt 9a vollständig nachgegeben wurde.

Typischerweise wird das Seil 9 mittels der Schrauben 10 so am Stromabnehmerarm 1 fixiert, dass der Schleifschuhträger 2 in Fig. 3B um bis zu etwa 90° nach links vom Stromabnehmerarm 1 weg und um etwa bis zu 30° aus der Bildebene ausgelenkt werden kann, wenn der Schleifschuhträger 2 vom Stromabnehmerarm 1 abgerissen ist, der Reserveabschnitt 9a aber nicht freigegeben ist.

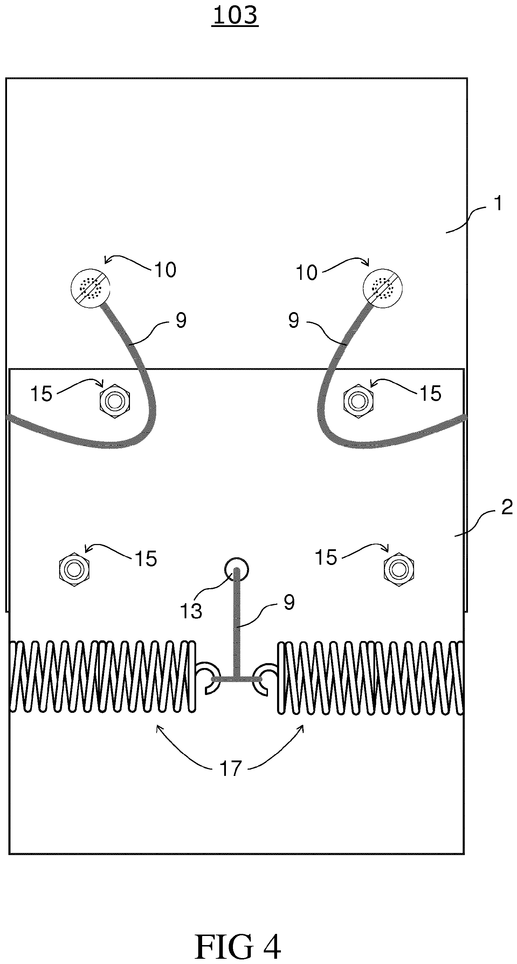

Figur 4 zeigt eine schematische Rückansicht eines Seitenstromabnehmers 103 für ein Schienenfahrzeug, der wie der mit Bezug zu den Figuren 3A, 3B erläuterte Seitenstromabnehmer 102 ebenfalls ein flexibles Halteelement aufweist, das für sehr große Kollisionskräfte ausgelegt ist. Das flexible Halteelement des Seitenstromabnehmers 103 hat jedoch neben dem Seil 9 eine damit verbundene zusätzliche Feder 17 zum Aufnehmen großer, über der mittels der Schrauben 15 einstellbaren Sollbruchkraft liegender Kollisionskräfte. Bei der Feder kann es sich um eine Stahlfeder mit einem typischen Durchmesser in einem Bereich von 15-20 mm handeln.

In dem in Fig. 4 dargestellten exemplarischen Ausführungsbeispiel umgibt die Feder 17 den Schleifschuhträger 2 zumindest teilweise und ist mit dem Schleifschuhträger 2 verbunden ist, z.B. aufgeschraubt. Die beiden gezeigten Enden der Feder sind mit einem unteren Ende des Seils 9 verbunden, z.B. verknotet. Das Seil 9 ist durch eine Öffnung 13 im Schleifschuhträger 2 geführt und mittels einer Klemmschraube oder (wie gezeigt) mittels zweier Klemmschrauben 10 am Stromabnehmerarm 1 fixiert. Dabei kann sich das Seil 9 in zwei obere Enden aufteilen, die jeweils von einer der Schrauben 10 am Stromabnehmerarm 1 gehalten werden. In diesem Fall kann das untere Ende des Seils ein verdrilltes Ende sein.

Wenn der Schleifschuhträger 2 (zusammen mit dem nichtdargestellten Schleifschuh) abbricht, kann ein Teil der Kollisionsenergie von der Feder 17 aufgenommen werden.

Auch der Schleifschuhträger 2 des Seitenstromabnehmers 103 kann - wie oben erläutert wurde - als Teil einer Seitenstromabnehmervorrichtung eines Schienenfahrzeugs über ein flexibles Verbindungselement mit einem Schalter zur Detektion eines Abbruchs/Abrisses des Schleifschuhträgers 2 verbunden sein.

Alternativ zur Verwendung eines flexiblen Verbindungselements 4 und eines separaten flexiblen Halteelements, kann die Funktion beider Elemente auch von einem Element, z.B. von dem in Fig. 1B dargestellten flexiblen Verbindungselement 4 des Seitenstromabnehmers 100 übernommen werden. In dem in Fig. 1B dargestellten exemplarischen Ausführungsbeispiel ist das Verbindungselement 4 zwischen dem Seilzugschalter 8 und dem Führungsrohr 5 von einem Stopper 16 umgeben, dessen Außendurchmesser größer als ein Innendurchmesser des Führungsrohrs 5 ist. Beispielsweise kann der Stopper 16 auf das Verbindungselement 4 aufgeschoben sein. Stopper 16 und Verbindungselement 4 sind fest miteinander verbunden, z.B. lösbar über eine nichtdargestellte Schraubverbindung oder einen Klemmmechanismus.

Im Falle einer Beschädigung des Schleifschuhträgers 2 kann der Schaltzustand des Seilzugschalters 8 geändert werden, ein ggf. abgerissener Teil des Schleifschuhträgers 2 wird aber durch den dann auf dem Führungsrohr 5 sitzenden Stopper 16 und das Verbindungselement 4 am schienenfahrzeugseitigen Endbereich 30 gehalten.

Das Verbindungselement 4 weist damit einen oberen Abschnitt, der den Stift 7 des Seilzugschalters 8 mit dem Stopper 16 verbindet, und einen unteren Abschnitt, der den Stopper 16 mit dem Schleifschuhträger 2 verbindet und der das flexible Halteelement bildet bzw. die Funktion des flexiblen Halteelements übernehmen kann, auf.

Weil der obere Abschnitt im Falle einer Beschädigung des Schleifschuhträgers 2 nur kleinere Kräfte als der untere Abschnitt des Verbindungselements 4 aufnimmt, können oberer und unterer Abschnitt aus verschiedenen Materialien bestehen und/oder einen verschiedenen Durchmesser aufweisen.

Da oberer und unterer Abschnitt des Verbindungselements 4 jeweils fest mit dem Stopper 16 verbunden sein können, kann das Verbindungselement 4 auch zweistückig sein. Beispielsweise kann der obere Abschnitt von einem isolierenden Kunststoffseil und der untere Abschnitt von einem Stahlseil gebildet werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: Seitenstromabnehmerarm
- 2: Schleifschuhträger
- 3: Schleifschuh
- 4: flexibles Verbindungselement
- 4a, 4b: Ende des Verbindungselements
- 5: Führungselement
- 6: Gehäuse
- 7: Stift, Stößel
- 8: Schaltvorrichtung
- 9: flexibles Halteelement
- 10: Klemme für das flexible Halteelement
- 30: schienenfahrzeugseitiger Endbereich
- 40: stromschienenseitiger Endbereich
- 11 - 14: Öffnung
- 15: Schrauben mit Sollbruchstelle
- 16: Stopper
- 17: Feder
- 51: Schiene
- 55: Stromschiene
- 100 - 103: Seitenstromabnehmer
- 500 - 502: Seitenstromabnehmervorrichtung
- 600: Schienenfahrzeug
- 1000: Verkehrssystem

## Patentansprüche

1. Seitenstromabnehmervorrichtung (500 - 502) für ein Schienenfahrzeug (500), aufweisend:
- einen Seitenstromabnehmer (100 - 103) mit einem schienenfahrzeugseitigen Endbereich (30) und einem stromschienenseitigen Endbereich (40), der in einer im Wesentlichen starren Verbindung mit dem schienenfahrzeugseitigen Endbereich (30) steht, wobei der Seitenstromabnehmer (100 - 103) einen Stromabnehmerarm (1), der den schienenfahrzeugseitigen Endbereich (30) bildet, einen Schleifschuhträger (2), der zumindest einen Teil des stromschienenseitigen Endbereichs (40) bildet und einen am Schleifschuhträger (2) befestigten Schleifschuh (3) aufweist;
- ein Stromkabel in ohmschem Kontakt mit dem Schleifschuh (3); und
- ein flexibles Halteelement (9, 17), das derart angeordnet ist, dass der stromschienenseitige Endbereich (40) über das flexible Halteelement (9, 17) an dem schienenfahrzeugseitigen Endbereich (30) gehalten wird, wenn die im Wesentlichen starre Verbindung zwischen dem stromschienenseitigen Endbereich (40) und dem schienenfahrzeugseitigen Endbereich (30) getrennt ist.

2. Seitenstromabnehmervorrichtung (500 - 502) nach Anspruch 1, weiter aufweisend:
- ein Verbindungselement (4) mit einem ersten Ende (4a), das mit dem stromschienenseitigen Endbereich (40) verbunden ist; und
- eine Schaltvorrichtung (8), die lagefixiert zu dem schienenfahrzeugseitigen Endbereich (30) angeordnet ist und mit einem zweiten Ende (4b) des Verbindungselements (4) verbunden ist, wobei sich ein Schaltzustand der Schaltvorrichtung (8) ändert, wenn die im Wesentlichen starre Verbindung zwischen dem stromschienenseitigen Endbereich (40) und dem schienenfahrzeugseitigen Endbereich (30) getrennt wird und der abgetrennte stromschienenseitige Endbereich (40) über das Verbindungselement (4) eine Zugkraft auf die Schaltvorrichtung (8) ausübt.

3. Seitenstromabnehmervorrichtung (500 - 502) nach Anspruch 1 oder 2, wobei der Seitenstromabnehmer (100 - 103) ein an dem Stromabnehmerarm (1) befestigtes Führungselement (5) zum Führen des Verbindungselements (4) aufweist, und/oder wobei das Führungselement (5) einen Führungskanal umfasst.

4. Seitenstromabnehmervorrichtung (500 - 502) nach Anspruch 2 oder 3, wobei das Verbindungselement (4) flexibel oder starr ist, wobei das Verbindungselement (4) in einem betriebsbereiten Zustand der Seitenstromabnehmervorrichtung im Wesentlichen nicht unter einer Zugspannung steht, wobei das Verbindungselement (4) fadenförmig oder bandförmig ist, und/oder wobei zumindest das zweite Ende (4b) des Verbindungselements (4) elektrisch isolierend ist.

5. Seitenstromabnehmervorrichtung (500 - 502) nach einem der vorangehenden Ansprüche, wobei das flexible Halteelement (9, 17) eine Länge aufweist, die höchstens dem 1,5-fachen eines Abstands zwischen einem ersten Befestigungspunkt des flexiblen Halteelements (9, 17) am stromschienenseitigen Endbereich (40) und einem zweiten Befestigungspunkt des flexiblen Halteelements (9, 17) am schienenfahrzeugseitigen Endbereich (30) entspricht.

6. Seitenstromabnehmervorrichtung (500 - 502) nach einem der vorangehenden Ansprüche, wobei das flexible Halteelement (9, 17) ein Seil (9), ein Band, eine Kette und/oder eine Feder (17) aufweist, und/oder wobei das flexible Halteelement zumindest teilweise von dem Verbindungselement (4) gebildet wird.

7. Seitenstromabnehmervorrichtung (500 - 502) nach einem der vorangehenden Ansprüche, wobei das flexible Halteelement (9) eine Zugkraft von 1 kN aufnehmen kann, und/oder wobei das flexible Halteelement (9) aus Stahl besteht.

8. Seitenstromabnehmervorrichtung (500 - 502) nach einem der vorangehenden Ansprüche, wobei die Seitenstromabnehmervorrichtung zwei flexible Halteelemente (9, 17) aufweist.

9. Seitenstromabnehmervorrichtung (500 - 502) nach einem der Ansprüche 1 bis 8, wobei die im Wesentlichen starre Verbindung mittels eines Befestigungsmittels (15) ausgeführt ist, das eine Sollbruchstelle aufweist, derart, dass der Schleifschuhträger (2) zusammen mit dem Schleifschuh (3) vom Stromabnehmerarm (1) abreißt, wenn eine hinreichend große Kraft auf den Schleifschuh (3) einwirkt.

10. Seitenstromabnehmervorrichtung (500 - 502) nach einem der Ansprüche 2 bis 9, wobei die Schaltvorrichtung (8) ein Gehäuse (6) und einen relativ zum Gehäuse (6) bewegbares Betätigungselement (7) umfasst, an dem der zweite Endbereich (4b) befestigt ist.

11. Schienenfahrzeug (600), aufweisend:
- ein Fahrgestell; und
- mindestens eine Seitenstromabnehmervorrichtung (500 - 502) nach einem der vorangehenden Ansprüche, dessen schienenfahrzeugseitiger Endbereich (30) an dem Fahrgestell befestigt ist; oder
- mindestens eine Seitenstromabnehmervorrichtung (500 - 502) nach einem der Ansprüche 2 bis 10, dessen Schaltvorrichtung (8) an dem Fahrgestell befestigt ist.

12. Schienenfahrzeug (600) nach Anspruch 11, wobei die Seitenstromabnehmervorrichtung (500 - 502) in einem Fahrwerksbereich des Schienenfahrzeugs angeordnet sind.

13. Schienenfahrzeug (600) nach einem der Ansprüche 11 und 12, wobei eine Länge des flexiblen Halteelements (9) so ausgeführt ist, dass der Schleifschuhträger (2) oberhalb eines Gleisbetts gehalten wird, wenn die im Wesentlichen starre Verbindung zwischen Schleifschuhträger (2) und Stromabnehmerarm (1) unterbrochen ist, und/oder der Schleifschuhträger (2) zusammen mit dem Schleifschuh (3) vom Stromabnehmerarm (1) abreißt.

14. Schienenfahrzeug (600) nach einem der Ansprüche 11 bis 13, weiter umfassend ein mit der Schaltvorrichtung (8) verbundenes Steuersystem, dass eine Änderung des Schaltzustands der Schaltvorrichtung (8) detektieren und/oder auf einer Anzeige wiedergeben kann.

15. Schienenfahrzeug (600) nach einem der Ansprüche 11 bis 14, wobei das Schienenfahrzeug ein Triebwagen für einen Nahverkehrszug ist.

## Claims

1. A side current collector device (500 - 502) for a rail vehicle (500), comprising:
- a side current collector (100 - 103) having a rail-vehicle-side end portion (30) and a current-collecting-rail-side end portion (40) in substantially rigid connection with the rail vehicle-side-end portion (30), the side current collector (100 - 103) comprising a current collector arm (1) forming the rail-vehicle-side end portion (30), a collector shoe carrier (2) forming at least a part of the rail-vehicle-side end portion (40), and a collector shoe (3) fixed to the collector shoe carrier (2);
- a power cable in ohmic contact with the collector shoe (3); and
- a flexible retaining member (9, 17) arranged such that the current-collecting-rail-side end portion (40) is retained to the rail-vehicle-side end portion (30) via the flexible retaining member (9, 17) when the substantially rigid connection between the current-collecting-rail-side end portion (40) and the rail-vehicle-side end portion (30) is disconnected.

2. The side current collector device (500 - 502) of claim 1, further comprising:
- a connecting member (4) comprising a first end (4a) connected to the current-collecting-rail-side end portion (40); and
- a switching device (8) arranged positionally fixed to the rail-vehicle-side end portion (30) and connected to a second end (4b) of the connecting member (4), wherein a switching state of the switching device (8) changes when the substantially rigid connection between the current-collecting-rail-side end portion (40) and the rail-vehicle-side end portion (30) is disconnected and the disconnected current-collecting-rail-side end portion (40) exerts a pulling force on the switching device (8) via the connecting member (4).

3. The side current collector device (500 - 502) according to claim 1 or 2, wherein the side current collector (100 -103) comprises a guide member (5) attached to the current collector arm (1) for guiding the connecting member (4), and/or wherein the guide member (5) comprises a guide channel .

4. The side current collector device (500-502) according to claim 2 or 3, wherein the connecting member (4) is flexible or rigid, wherein the connecting member (4) is substantially not under tensile stress in an operative state of the side current collector device, wherein the connecting member (4) is filamentary or ribbon-shaped, and/or wherein at least the second end (4b) of the connecting member (4) is electrically insulating.

5. The side current collector device (500 - 502) according to any one of the preceding claims, wherein the flexible retaining member (9, 17) comprises a length corresponding to at most 1.5 times a distance between a first attachment point of the flexible retaining member (9, 17) at the current-collecting-rail-side end portion (40) and a second attachment point of the flexible retaining member (9, 17) at the rail-vehicle-side end portion (30).

6. The side current collector device (500 - 502) according to any one of the preceding claims, wherein the flexible retaining element (9, 17) comprises a rope (9), a band, a chain and/or a spring (17), and/or wherein the flexible retaining element is at least partially formed by the connecting element (4).

7. The side current collector device (500 - 502) according to any one of the preceding claims, wherein the flexible retaining element (9) can absorb a tensile force of 1 kN, and/or wherein the flexible retaining element (9) is made of steel.

8. The side current collector device (500 - 502) according to any one of the preceding claims, wherein the side current collector device comprises two flexible retaining elements (9, 17).

9. The side current collector device (500 - 502) according to any one of claims 1 to 8, wherein the substantially rigid connection is implemented by means of a fastening means (15) comprising a predetermined breaking point, such that the collector shoe carrier (2) together with the collector shoe (3) breaks away from the current collector arm (1) when a sufficiently large force is applied to the collector shoe (3).

10. The side current collector device (500 - 502) according to any one of claims 2 to 9, wherein the switching device (8) comprises a housing (6) and an actuator (7) movable relative to the housing (6) to which the second end portion (4b) is attached.

11. Rail vehicle (600), comprising:
- a chassis; and
- at least one side current collector device (500 - 502) according to any one of the preceding claims, the rail-vehicle-side end portion (30) of which is fixed to the chassis; or
- at least one side current collector device (500 - 502) according to any one of claims 2 to 10, the switching device (8) of which is attached to the chassis.

12. The rail vehicle (600) of claim 11, wherein the side current collector device (500 - 502) is disposed in a chassis region of the rail vehicle.

13. The rail vehicle (600) of any one of claims 11 and 12, wherein a length of the flexible retaining member (9) is configured to retain the collector shoe carrier (2) above a track bed when the substantially rigid connection between the collector shoe carrier (2) and the current collector arm (1) is broken, and/or the collector shoe carrier (2) breaks away from the current collector arm (1) together with the collector shoe (3).

14. The rail vehicle (600) according to any one of claims 11 to 13, further comprising a control system connected to the switching device (8) that can detect a change in the switching state of the switching device (8) and/or display it on a display.

15. The rail vehicle (600) of any one of claims 11 to 14, wherein the rail vehicle is a railcar for a commuter train.

## Revendications

1. Dispositif de pantographe latéral (500 - 502) pour un véhicule ferroviaire (500), présentant :
- un pantographe latéral (100 - 103) comportant une partie terminale côté véhicule ferroviaire (30) et une partie terminale côté rails conducteurs (40) qui est en liaison sensiblement rigide avec la partie terminale côté véhicule ferroviaire (30), le pantographe latéral (100 - 103) présentant un bras de pantographe (1) formant la partie terminale côté véhicule ferroviaire (30), un support de frotteur (2) formant au moins un segment de la partie terminale côté rails conducteurs (40) et un frotteur (3) fixé au support de frotteur (2) ;
- un câble électrique en contact ohmique avec le frotteur (3) ; et
- un élément de retenue flexible (9, 17), conçu de façon que la partie terminale côté rails conducteurs (40) soit maintenue sur la partie terminale côté véhicule ferroviaire (30) au moyen de l'élément de retenue flexible (9, 17), lorsque la liaison sensiblement rigide entre la partie terminale côté rails conducteurs (40) et la partie terminale côté véhicule ferroviaire (30) est rompue.

2. Dispositif de pantographe latéral (500 - 502) selon la revendication 1, présentant également :
- un élément de liaison (4) comportant une première extrémité (4a), reliée à la partie terminale côté rails conducteurs (40) ; et
- un dispositif de commutation (8), monté fixé en position par rapport à la partie terminale côté véhicule ferroviaire (30) et relié à une seconde extrémité (4b) de l'élément de liaison (4), sachant qu'un état de commutation du dispositif de commutation (8) change lorsque la liaison sensiblement rigide entre la partie terminale côté rails conducteurs (40) et la partie terminale côté véhicule ferroviaire (30) est rompue et que la partie terminale côté rails conducteurs (40) séparée exerce une force de traction sur le dispositif de commutation (8) au moyen de l'élément de liaison (4).

3. Dispositif de pantographe latéral (500 - 502) selon la revendication 1 ou 2, le pantographe latéral (100 - 103) présentant un élément de guidage (5) fixé au bras de pantographe (1) pour guider l'élément de liaison (4), et/ou l'élément de guidage (5) comprenant un canal de guidage.

4. Dispositif de pantographe latéral (500 - 502) selon la revendication 2 ou 3, l'élément de liaison (4) étant flexible ou rigide, l'élément de liaison (4) n'étant sensiblement pas sollicité par une contrainte de traction lorsque le dispositif de pantographe latéral est en état de marche, l'élément de liaison (4) étant filiforme ou en forme de bande, et/ou au moins la seconde extrémité (4b) de l'élément de liaison (4) étant électriquement isolante.

5. Dispositif de pantographe latéral (500 - 502) selon l'une des revendications précédentes, l'élément de retenue flexible (9, 17) présentant une longueur ne dépassant pas 1,5 fois la distance entre un premier point de fixation de l'élément de retenue flexible (9, 17) au niveau de la partie terminale côté rails conducteurs (40) et un second point de fixation de l'élément de retenue flexible (9, 17) au niveau de la partie terminale côté véhicule ferroviaire (30).

6. Dispositif de pantographe latéral (500 - 502) selon l'une des revendications précédentes, l'élément de retenue flexible (9, 17) présentant une corde (9), une bande, une chaîne et/ou un ressort (17), et/ou l'élément de retenue flexible étant formé au moins en partie par l'élément de liaison (4).

7. Dispositif de pantographe latéral (500 - 502) selon l'une des revendications précédentes, l'élément de retenue flexible (9) pouvant recevoir une force de traction de 1 kN et/ou l'élément de retenue flexible (9) étant en acier.

8. Dispositif de pantographe latéral (500 - 502) selon l'une des revendications précédentes, ledit dispositif présentant deux éléments de retenue flexibles (9, 17).

9. Dispositif de pantographe latéral (500 - 502) selon l'une des revendications 1 à 8, la liaison sensiblement rigide étant réalisée à l'aide d'un moyen de fixation (15) présentant une zone de rupture privilégiée, de telle manière que le support de frotteur (2) se détache du bras de pantographe (1) conjointement avec le frotteur (3) lorsqu'une force suffisante est exercée sur le frotteur (3).

10. Dispositif de pantographe latéral (500 - 502) selon l'une des revendications 2 à 9, le dispositif de commutation (8) comprenant un boîtier (6) et un élément d'actionnement (7) qui est mobile par rapport au boîtier (6) et auquel est fixée la seconde extrémité (4b).

11. Véhicule ferroviaire (600) présentant :
- un châssis ; et
- au moins un dispositif de pantographe latéral (500 - 502) selon l'une des revendications précédentes, dont la partie terminale côté véhicule ferroviaire (30) est fixée au châssis ; ou
- au moins un dispositif de pantographe latéral (500 - 502) selon l'une des revendications 2 à 10, dont le dispositif de commutation (30) est fixé au châssis.

12. Véhicule ferroviaire (600) selon la revendication 11, le dispositif de pantographe latéral (500 - 502) étant disposé dans une zone de train de roulement du véhicule ferroviaire.

13. Véhicule ferroviaire (600) selon l'une des revendications 11 et 12, une longueur de l'élément de retenue flexible (9) étant réalisée de telle manière que le support de frotteur (2) est maintenu au-dessus d'un lit de ballast lorsque la liaison sensiblement rigide entre le support de frotteur (2) et le bras de pantographe (1) est rompue, et/ou que le support de frotteur (2) se détache du bras de pantographe (1) conjointement avec le frotteur (3).

14. Véhicule ferroviaire (600) selon l'une des revendications 11 à 13, comprenant également un système de commande relié au dispositif de commutation (8), lequel système de commande peut détecter une modification de l'état de commutation du dispositif de commutation (8) et/ou la reproduire sur un écran d'affichage.

15. Véhicule ferroviaire (600) selon l'une des revendications 11 à 14, le véhicule ferroviaire étant une motrice pour un train de banlieue.
